# FASCICULE DE BREVET EUROPEEN

(11) **EP 0 940 624 B1**
(45) Date de publication et mention de la délivrance du brevet: **19.09.2007**
(21) Numéro de dépôt: 99400482.8
(22) Date de dépôt: 01.03.1999
(51) Int. Cl.: F17D 1/04, F17D 1/07

(54) **Poste et procédé de distribution d'un gaz détendu**
Station und Verfahren zur Verteilung von Gas
Distribution station and method for expanded gas

(30) Priorité: 02.03.1998 FR 9802489
(43) Date de publication de la demande: 08.09.1999
(73) Titulaire: L'AIR LIQUIDE, Société Anonyme pour l'Etude et l'Exploitation des Procédés Georges Claude, 75007 Paris (FR)
(72) Inventeur: Boyer-Vidal, Aymeric, 75017 Paris (FR)
(74) Mandataire: Le Moenner, Gabriel

(56) Documents cités:
- EP-A- 0 733 849
- DE-A- 2 423 002
- GB-A- 2 103 354
- US-A- 2 873 180
- US-A- 3 990 256

## Description

La présente invention concerne un poste de distribution de gaz sous une pression de distribution du type comportant :
- une conduite d'admission de gaz sous une haute pression d'admission ;
- une conduite de distribution du gaz sous une pression de distribution inférieure à la haute pression d'admission ; et
- des moyens de détente du gaz à distribuer, de la haute pression d'admission à la pression de distribution.

De tels postes de distribution sont utilisés aux différents points de distribution d'un réseau collectif d'alimentation en un gaz, par exemple de l'azote.

Dans les canalisations du réseau collectif de distribution, le gaz est transporté sous une haute pression, généralement de 40 bars dans le cas de l'azote.

De nombreux utilisateurs souhaitent disposer du gaz, en sortie du poste de distribution, sous une pression de distribution inférieure à la pression de transport correspondant à la pression d'admission dans le poste de distribution. Cette pression de distribution souhaitée, en sortie du poste de distribution, est par exemple égale à 10 bars dans le cas de l'azote.

Afin de satisfaire aux exigences de l'utilisateur, le poste de distribution comporte donc des moyens de détente du gaz depuis la pression d'admission (40 bars) jusqu'à la pression de distribution (10 bars).

Ces moyens de détente sont généralement constitués par une vanne de détente et/ou d'un détendeur. Une telle détente conduit à une perte d'énergie importante, le différentiel de pression constituant une énergie potentielle non utilisée.

Dans GB-A- 2 103 354, considéré comme art antérieur le plus proche, le gaz à haute pression est détendu dans une turbine ainsi produisant du liquide. Le gaz détendu est recomprimé et envoyé au client.

L'invention a pour but d'améliorer le rendement énergétique de tels postes de distribution, en réduisant les pertes énergétiques.

A cet effet, l'invention a pour objet un poste de distribution de gaz du type précité, caractérisé en ce que lesdits moyens de détente comprennent une machine de détente avec production de travail extérieur, et en ce que le poste comporte :
- en amont des moyens de détente, des moyens de division du gaz admis en une fraction à distribuer et une fraction complémentaire ;
- en aval des moyens de division, des moyens de liquéfaction au moins partielle de ladite fraction complémentaire du gaz admis, comprenant des moyens d'échange de chaleur avec la fraction détendue du gaz admis ; et
- des moyens de recueil de la fraction complémentaire liquéfiée.

Suivant des modes particuliers de réalisation, le poste de distribution comporte l'une ou plusieurs des caractéristiques suivantes :
- ladite machine de détente avec production de travail extérieur comporte une turbine ;
- il comporte un surpresseur disposé en amont des moyens de division, lequel surpresseur est couplé à la machine de détente pour son entraînement ;
- lesdits moyens d'échange de chaleur comportent un échangeur de chaleur à contre-courant comprenant :
   - des passages de refroidissement dont le bout chaud est relié à la conduite d'admission et le bout froid à un réservoir de stockage de la fraction complémentaire liquéfiée,
   - des passages de réchauffement dont le bout froid est relié à l'échappement de la machine de détente et le bout chaud à la conduite de distribution, et
   - un piquage reliant un point intermédiaire des passages de refroidissement à l'admission de la machine de détente ;
- les moyens de liquéfaction comportent en outre une vanne de détente de la fraction complémentaire, disposée en aval de l'échangeur de chaleur ;
- il comporte une conduite de renvoi d'une partie non liquéfiée de ladite fraction complémentaire de gaz, laquelle conduite relie la partie supérieure du réservoir à l'échappement de la machine de détente ;
- le débit de la fraction complémentaire du gaz admis est compris entre 0,01 et 0,5 fois le débit du gaz admis ;
- le gaz est de l'azote et le débit de la fraction complémentaire du gaz admis est compris entre 0,05 et 0,19 fois le débit du gaz admis ; et
- lesdits moyens de recueil de la fraction complémentaire liquéfiée sont reliés par l'intermédiaire de moyens de vaporisation à la conduite de distribution.

L'invention a en outre pour objet un procédé de distribution d'un gaz sous une pression de distribution, comportant les étapes suivantes :
- l'admission du gaz sous une haute pression d'admission ;
- la détente du gaz admis, de la haute pression d'admission à la pression de distribution inférieure ; et
- la distribution de ladite fraction du gaz sous la pression de distribution ;
caractérisé en ce qu'il comporte en outre les étapes suivantes :
- le prélèvement d'une fraction complémentaire du gaz admis, avant ladite détente ;
- la liquéfaction au moins partielle de la fraction complémentaire comprenant un échange de chaleur avec la fraction détendue du gaz admis ; et
- le recueil de la fraction complémentaire liquéfiée.

En variante, on échauffe une fraction gazeuse non liquéfiée par échange avec la fraction complémentaire du gaz à liquéfier.

La haute pression peut être supercritique préférablement moins que 70 bar.

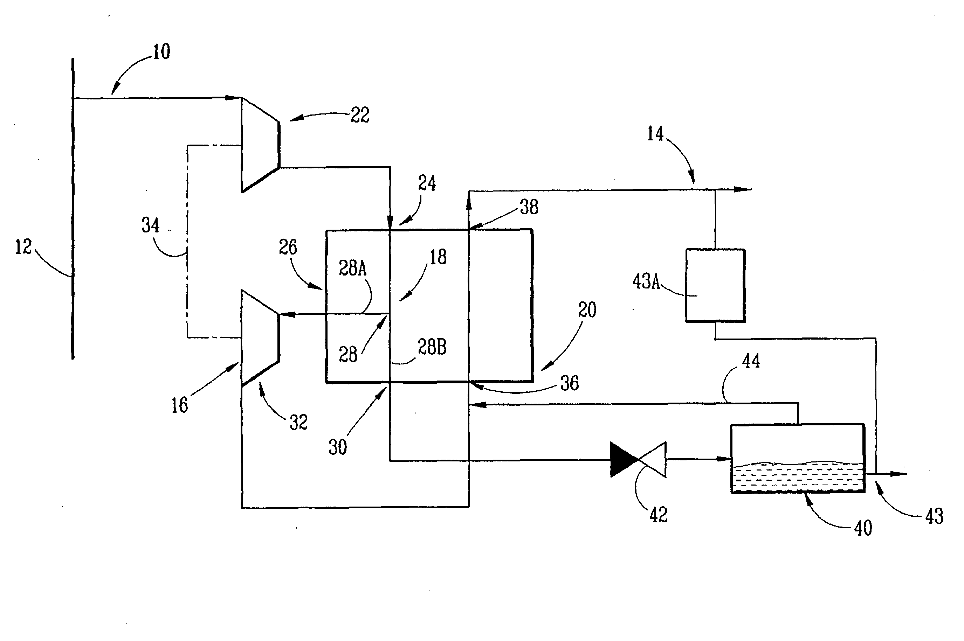

L'invention sera mieux comprise à la lecture de la description qui va suivre, donnée uniquement à titre d'exemple et faite en se référant à l'unique figure qui est un schéma d'un poste de distribution selon l'invention.

Le poste de distribution représenté sur l'unique figure comporte d'une part une conduite 10 d'admission de gaz, piquée sur un réseau collectif d'alimentation 12 sous une pression de transport ou d'admission, et d'autre part une conduite 14 de distribution d'une fraction du gaz admis, sous une pression de distribution inférieure à la pression d'admission.

Le poste de distribution comporte des moyens 16 de détente de la fraction du gaz à distribuer jusqu'à la pression de distribution.

Le poste comporte en outre des moyens 18 de division du gaz admis en une fraction à distribuer et une fraction complémentaire. Ces moyens sont disposés en amont des moyens de détente 16. Des moyens 20 de liquéfaction de la fraction complémentaire du gaz admis sont disposés en aval des moyens de détente 16 dans le poste de distribution.

Plus précisément, dans le mode de réalisation décrit, la conduite 10 est reliée à l'admission d'un surpresseur 22 dont le refoulement est relié au bout chaud 24 du passage de refroidissement d'un échangeur thermique à contre-courant 26 formant un élément des moyens de liquéfaction 20.

Les moyens de division 18 sont disposés dans l'échangeur 26. En particulier, un piquage 28 est prévu entre le bout chaud 24 et le bout froid, noté 30, du passage de refroidissement de l'échangeur. Le piquage 28 crée une dérivation. Une des branches, notée 28A, transportant la fraction du gaz à détendre sort de l'échangeur 26 et alimente une machine de détente avec production de travail extérieur 32 formant les moyens de détente 16. L'autre des branches, notée 28B, transportant la fraction complémentaire du gaz admis se prolonge dans l'échangeur jusqu'au bout froid 30 du passage de refroidissement de l'échangeur.

La machine de détente avec production de travail extérieur est formée par exemple par une turbine. Celle-ci est couplée par une chaîne de transmission mécanique 34 au surpresseur 22 afin d'assurer l'entraînement de ce dernier.

Le refoulement de la turbine 16 est relié au bout froid noté 36 du passage de réchauffement de l'échangeur 26. Le bout chaud, noté 38, du passage de réchauffement est relié directement à la conduite de distribution 14.

Le bout froid 30 du passage de refroidissement de l'échangeur est relié à un réservoir de stockage d'azote liquide 40 par l'intermédiaire d'une vanne de détente 42. Le réservoir est muni d'une sortie 43 de distribution d'azote liquide. De plus, la sortie 43 est reliée, par l'intermédiaire de moyens de vaporisation 43A, à la conduite 14 pour compléter après vaporisation le flux gazeux distribué en cas de demande accrue.

Une dérivation 44 est prévue entre la partie supérieure du réservoir de stockage 40 et le bout froid 36 du passage de réchauffement de l'échangeur, afin d'assurer la dérivation de la partie non liquéfiée de la fraction complémentaire du gaz.

En variante non représentée, la dérivation 44 traverse l'échangeur 26 en étant indépendante du passage de réchauffement. Tel est le cas, notamment, si la pression en sortie de la turbine 32 est différente de la pression dans la dérivation 44.

Le dimensionnement de l'installation qui va être décrite correspond à un poste de distribution d'azote adapté pour produire un débit de 10000 Nm³/h (normaux mètres cubes par heure) sous une pression de 10 bars d'azote à la température ambiante.

Dans cet exemple, le réseau collectif d'alimentation 12 fournit de l'azote à la température ambiante de 20°C sous une pression de 40 bars.

Afin d'assurer un débit de 10000 Nm³/h dans la conduite de distribution 14, le débit dans la conduite d'admission 10 est choisi supérieur au débit souhaité par l'utilisateur en vue d'assurer, simultanément à la distribution de l'azote gazeux sous une pression de 10 bars, un remplissage du réservoir 40 avec de l'azote liquéfié.

A cet effet, le débit à l'entrée est fixé à 11249 Nm³/h.

Le surpresseur 22 est dimensionné afin d'assurer une augmentation de la pression du flux d'azote en sortie de celui-ci. Si le surpresseur provoque une élévation importante de la température du flux gazeux, des moyens de réfrigération, non représentés, sont disposés entre le surpresseur 22 et le bout chaud 24 du passage de refroidissement de l'échangeur. Ces moyens de réfrigération sont par exemple un échangeur à air.

Ainsi, au bout chaud 24 du passage de refroidissement de l'échangeur, l'azote a une pression supercritique de 55 bars et une température de 20°C.

Le piquage 28 est positionné à une température intermédiaire de -105°C et la température au bout froid 30 de l'échangeur est de -162°C.

La dérivation 18 est dimensionnée de sorte que le débit circulant au bout froid 30 est de 1374 Nm³/h, alors que le débit envoyé vers la turbine 32 est de 9875 Nm³/h.

Avantageusement, le débit de fraction complémentaire du gaz admis destinée à être liquéfiée est compris entre 0,05 et 0,19 fois le débit du gaz admis.

Au bout froid 30 du passage de refroidissement de l'échangeur, l'azote est dans un état supercritique, de sorte qu'après passage au travers de la vanne de détente 42, de 90 à 95 % de l'azote se trouve en phase liquide à une température égale à -166°C et sous une pression sensiblement égale à 11 bars. Ainsi, un débit de l'ordre de 1249 Nm³/h est liquéfié et s'accumule dans le réservoir 40.

En sortie de la turbine 16, l'azote circule à une température de -165°C sous une pression de 10 bars. L'azote est introduit à cette température au bout froid 36 du passage de réchauffement de l'échangeur 26. Au bout chaud 38 du passage de réchauffement, l'azote ressort à une température de l'ordre de 18°C sous une pression de 10 bars.

Au cours du trajet dans l'échangeur, l'azote est réchauffé de -165°C à 18°C par transfert de la chaleur issue de l'azote non détendu provenant du surpresseur 22 et circulant entre le bout chaud 24 et le bout froid 30 du passage de refroidissement.

De plus, l'azote résiduel non liquéfié et introduit dans le réservoir 40 est renvoyé par la dérivation 44 vers le bout froid 36 du passage de réchauffement de l'échangeur. Le débit de l'azote gazeux ainsi renvoyé est sensiblement égal à 125 Nm³/h.

On comprend ainsi, qu'au bout froid 36 de l'échangeur, sont introduits 10000 Nm³/h d'azote issu, soit directement de la turbine 16 avec un débit de 9875 Nm³/h, soit du réservoir 40 avec un débit de 125 Nm³/h.

Le surpresseur 22 est facultatif. Toutefois, en présence de celui-ci, la productivité du poste de distribution est accrue.

En l'absence de surpresseur, la turbine 16 est freinée par tout dispositif adapté tel qu'une génératrice électrique ou un frein à huile.

Avec un tel poste de distribution, l'utilisateur dispose d'un point de distribution d'azote avec le débit souhaité sous la pression souhaitée. De plus, il bénéficie, sans apport d'énergie supplémentaire, d'un stockage d'azote liquide dans le réservoir 40, l'azote liquide étant disponible à une température de -166°C et sous une pression de 11 bars.

La productivité d'un tel poste de distribution concernant la production de gaz liquéfié est très bonne par rapport aux installations de liquéfaction connues.

En effet, pour un liquéfacteur de l'état de la technique mettant en oeuvre un cycle de liquéfaction classique, la performance atteinte pour l'azote est de 0,55 kWh/Nm³ dans le meilleur des cas.

Avec un poste de distribution tel que décrit ici, l'énergie spécifique pour la liquéfaction, c'est-à-dire l'énergie nécessaire pour obtenir un volume donné de liquide, est de 0,18 kWh/Nm³.

Elle est égale au coût énergétique moyen de l'injection dans le réseau 12 de la quantité liquéfiée.

Le poste de distribution apporte donc un gain de productivité de l'ordre de (0,55-0,18)/0,18 = 206 %.

Le poste de distribution selon l'invention et le procédé mis en oeuvre procurent les avantages suivants :
- liquéfaction du gaz avec une très faible énergie spécifique ;
- valorisation de l'énergie de compression pour produire de l'azote liquide ;
- livraison de gaz sous forme liquide sans perte lors du chargement ou du déchargement ;
- livraison de gaz sous forme liquide avec un coût de transport réduit ;
- livraison de gaz sous forme liquide sans transvasement de liquide.

Un tel poste de distribution convient pour d'autres gaz, notamment l'air, l'oxygène, le gaz naturel, l'hydrogène, la vapeur d'eau, le monoxyde de carbone, le dioxyde de carbone, ou encore des mélanges de ces gaz.

## Revendications

1. Poste de distribution d'un gaz sous une pression de distribution, du type comportant :
- une conduite (10) d'admission de gaz sous une haute pression d'admission ;
- une conduite (14) de distribution du gaz sous une pression de distribution inférieure à la haute pression d'admission ; et
- des moyens (16) de détente du gaz à distribuer, de la haute pression d'admission à la pression de distribution,
- lesdits moyens de détente (16) comprenant une machine (32) de détente avec production de travail extérieur,
et **caractérisé en ce que** le poste comporte :
- en amont des moyens de détente (16), des moyens (18) de division du gaz admis en une fraction à distribuer et une fraction complémentaire ;
- en aval des moyens de division (18), des moyens (20) de liquéfaction au moins partielle de ladite fraction complémentaire du gaz admis, comprenant des moyens (26) d'échange de chaleur avec la fraction détendue du gaz admis ; et
- des moyens (40) de recueil de la fraction complémentaire liquéfiée.

2. Poste de distribution selon la revendication 1, **caractérisé en ce que** ladite machine de détente avec production de travail extérieur comporte une turbine (32).

3. Poste de distribution selon la revendication 1 ou 2, **caractérisé en ce qu'**il comporte un surpresseur (22) disposé en amont des moyens de division (18), lequel surpresseur (22) est couplé à la machine de détente (16) pour son entraînement.

4. Poste de distribution selon l'une quelconque des revendications précédentes, **caractérisé en ce que** lesdits moyens d'échange de chaleur comportent un échangeur de chaleur (26) à contre-courant comprenant :
- des passages de refroidissement dont le bout chaud (24) est relié à la conduite d'admission (10) et le bout froid (30) à un réservoir (40) de stockage de la fraction complémentaire liquéfiée ;
- des passages de réchauffement dont le bout froid (36) est relié à l'échappement de la machine de détente (32) et le bout chaud (38) à la conduite de distribution (14) ; et
- un piquage (28) reliant un point intermédiaire des passages de refroidissement à l'admission de la machine de détente (32).

5. Poste de distribution selon la revendication 4, **caractérisé en ce que** les moyens de liquéfaction (20) comportent en outre une vanne (42) de détente de la fraction complémentaire, disposée en aval de l'échangeur de chaleur (26).

6. Poste de distribution selon la revendication 4 ou 5, **caractérisé en ce qu'**il comporte une conduite (44) de renvoi d'une partie non liquéfiée de ladite fraction complémentaire de gaz, laquelle conduite (44) relie la partie supérieure du réservoir (40) à l'échappement de la machine de détente (32).

7. Poste de distribution selon l'une quelconque des revendications précédentes, **caractérisé en ce que** le débit de la fraction complémentaire du gaz admis est compris entre 0,01 et 0,5 fois le débit du gaz admis.

8. Poste de distribution selon la revendication 7, **caractérisé en ce que** le gaz est de l'azote et le débit de la fraction complémentaire du gaz admis est compris entre 0,05 et 0,19 fois le débit du gaz admis.

9. Poste de distribution selon l'une quelconque des revendications précédentes, **caractérisé en ce que** lesdits moyens (40) de recueil de la fraction complémentaire liquéfiée sont reliés par l'intermédiaire de moyens de vaporisation (43A) à la conduite de distribution (14).

10. Procédé de distribution d'un gaz sous une pression de distribution, comportant les étapes suivantes :
- l'admission du gaz sous une haute pression d'admission ;
- la détente du gaz admis, de la haute pression d'admission à la pression de distribution inférieure ; et
- la distribution de ladite fraction du gaz sous la pression de distribution ;
**caractérisé en ce qu'**il comporte en outre les étapes suivantes :
- le prélèvement d'une fraction complémentaire du gaz admis, avant ladite détente ;
- la liquéfaction au moins partielle de la fraction complémentaire comprenant un échange de chaleur avec la fraction détendue du gaz admis ; et
- le recueil de la fraction complémentaire liquéfiée.

11. Procédé de distribution selon la revendication 10, **caractérisé en ce qu'**on échauffe une fraction gazeuse non liquéfiée par échange avec la fraction complémentaire du gaz à liquéfier.

## Claims

1. Station for dispensing a gas under a dispensing pressure, of the type including:
- a line (10) for gas inlet under an inlet high pressure;
- a line (14) for dispensing the gas under a dispensing pressure lower than the inlet high pressure; and
- means (16) for reducing the pressure of the gas to be dispensed, from the inlet high pressure to the dispensing pressure,
- the said pressure-reducing means (16) comprising a machine (32) for pressure reduction with external work production,
and **characterized in that** the station includes:
- upstream of the pressure-reducing means (16), means (18) for dividing the inlet gas into a fraction to be dispensed and a complementary fraction;
- downstream of the dividing means (18), means (20) for at least partial liquefaction of the said complementary fraction of the inlet gas, comprising means (26) for exchanging heat with the reduced-pressure fraction of the inlet gas; and
- means (40) for collecting the liquefied complementary fraction.

2. Dispensing station according to Claim 1, **characterized in that** the said machine for pressure reduction with external work production includes a turbine (32).

3. Dispensing station according to Claim 1 or 2, **characterized in that** it includes a supercharger (22) arranged upstream of the dividing means (18), which supercharger (22) is coupled to the pressure-reducing machine (16) for driving it.

4. Dispensing station according to any one of the preceding claims, **characterized in that** the said heat-exchange means include a countercurrent heat exchanger (26) comprising:
- cooling passages whose hot end (24) is connected to the inlet line (10) and whose cold end (30) is connected to a reservoir (40) for storing the liquefied complementary fraction;
- warming passages whose cold end (36) is connected to the output of the pressure-reducing machine (32) and whose hot end (38) is connected to the dispensing line (14); and
- a tap (28) connecting an intermediate point on the cooling passages to the inlet of the pressure-reducing machine (32).

5. Dispensing station according to Claim 4, **characterized in that** the liquefying means (20) furthermore include a valve (42) which is intended to reduce the pressure of the complementary fraction and is arranged downstream of the heat exchanger (26).

6. Dispensing station according to Claim 4 or 5, **characterized in that** it includes a line (44) for returning an unliquefied part of the said complementary gas fraction, which line (44) connects the upper part of the reservoir (40) to the output of the pressure-reducing machine (32).

7. Dispensing station according to any one of the preceding claims, **characterized in that** the flow rate of the complementary fraction of the inlet gas is between 0.01 and 0.5 times the flow rate of the inlet gas.

8. Dispensing station according to Claim 7, **characterized in that** the gas is nitrogen and the flow rate of the complementary fraction of the inlet gas is between 0.05 and 0.19 times the flow rate of the inlet gas.

9. Dispensing station according to any one of the preceding claims, **characterized in that** the said means (40) for collecting the liquefied complementary fraction are connected via vaporizing means (43A) to the dispensing line (14).

10. Process for dispensing a gas under a dispensing pressure, including the following steps:
- inlet of the gas under an inlet high pressure;
- reduction of the pressure of the inlet gas, from the inlet high pressure to the lower dispensing pressure; and
- dispensing of the said fraction of the gas under the dispensing pressure;
**characterized in that** it furthermore includes the following steps:
- drawing off a complementary fraction of the inlet gas, before the said pressure reduction;
- at least partial liquefaction of the complementary fraction, comprising exchange of heat with the reduced-pressure fraction of the inlet gas; and
- collecting the liquefied complementary fraction.

11. Dispensing process according to Claim 10, **characterized in that** an unliquefied gas fraction is warmed by exchange with the complementary fraction of the gas to be liquefied.

## Patentansprüche

1. Station zur Verteilung von Gas unter einem Verteilerdruck, des Typs, der Folgendes umfasst:
- eine Leitung (10) zum Einlassen von Gas unter einem hohen Vordruck;
- eine Leitung (14) zum Verteilen von Gas unter einem Verteilerdruck, der niedriger als der hohe Vordruck ist; und
- Mittel (16) zum Entspannen des zu verteilenden Gases von dem hohen Vordruck auf den Verteilerdruck,
- wobei die Entspannungsmittel (16) eine Maschine (32) zum Entspannen bei Leistung von äußerer Arbeit umfassen,
und **dadurch gekennzeichnet, dass** die Station umfasst:
- den Entspannungsmitteln (16) vorgeschaltete Mittel (18) zum Teilen des eingelassenen Gases in eine zu verteilende Fraktion und in eine komplementäre Fraktion;
- den Teilungsmitteln (18) nachgeschaltete Mittel (20) zum Verflüssigen, zumindest teilweise, der komplementären Fraktion des eingelassenen Gases, die Mittel (26) zum Wärmeaustausch mit der entspannten Fraktion des eingelassenen Gases umfassen; und
- Mittel (40) zum Auffangen der verflüssigten komplementären Fraktion.

2. Verteilerstation nach Anspruch 1, **dadurch gekennzeichnet, dass** die Maschine zum Entspannen bei Leistung von äußerer Arbeit eine Turbine (32) umfasst.

3. Verteilerstation nach Anspruch 1 oder 2, **dadurch gekennzeichnet, dass** sie einen Kompressor (22) umfasst, der stromaufwärts der Teilungsmittel (18) angeordnet ist, wobei der Kompressor (22) für seinen Antrieb mit der Entspannungsmaschine (16) gekoppelt ist.

4. Verteilerstation nach einem der vorhergehenden Ansprüche, **dadurch gekennzeichnet, dass** die Wärmeaustauschmittel einen Gegenstrom-Wärmetauscher (26) umfassen, der Folgendes umfasst:
- Abkühlungsdurchlässe, deren warmes Ende (24) mit der Zuleitung (10) verbunden ist und deren kaltes Ende (30) mit einem Tank (40) zum Speichern der verflüssigten komplementären Fraktion verbunden ist;
- Erwärmungsdurchlässe, deren kaltes Ende (36) mit dem Auslass der Entspannungsmaschine (32) verbunden ist und deren warmes Ende (38) mit der Verteilungsleitung (14) verbunden ist; und
- eine Rohrabzweigung (28), die einen Zwischenpunkt der Abkühlungsdurchlässe mit dem Einlass der Entspannungsmaschine (32) verbindet.

5. Verteilerstation nach Anspruch 4, **dadurch gekennzeichnet, dass** die Verflüssigungsmittel (20) außerdem ein Ventil (42) zum Entspannen der komplementären Fraktion umfassen, das stromabwärts des Wärmetauschers (26) angeordnet ist.

6. Verteilerstation nach Anspruch 4 oder 5, **dadurch gekennzeichnet, dass** sie eine Leitung (44) zum Zurückführen eines nicht verflüssigten Teils der komplementären Gasfraktion umfasst, wobei diese Leitung (44) den oberen Teil des Tanks (40) mit dem Auslass der Entspannungsmaschine (32) verbindet.

7. Verteilerstation nach einem der vorhergehenden Ansprüche, **dadurch gekennzeichnet, dass** der Volumenstrom der komplementären Fraktion des eingelassenen Gases im Bereich zwischen 0,01- und 0,5-mal dem Volumenstrom des eingelassenen Gases liegt.

8. Verteilerstation nach Anspruch 7, **dadurch gekennzeichnet, dass** das Gas Stickstoff ist und der Volumenstrom der komplementären Fraktion des eingelassenen Gases im Bereich zwischen 0,05- und 0,19-mal dem Volumenstrom des eingelassenen Gases liegt.

9. Verteilerstation nach einem der vorhergehenden Ansprüche, **dadurch gekennzeichnet, dass** die Mittel (40) zum Auffangen der verflüssigten komplementären Fraktion über Mittel (43A) zum Verdampfen mit der Verteilungsleitung (14) verbunden sind.

10. Verfahren zur Verteilung eines Gases unter einem Verteilerdruck, das die folgenden Schritte umfasst:
- Einlassen des Gases unter einem hohen Vordruck;
- Entspannen des eingelassenen Gases von dem hohen Vordruck auf den niedrigeren Verteilerdruck; und
- Verteilen der Fraktion des Gases unter dem Verteilerdruck;
**dadurch gekennzeichnet, dass** es außerdem die folgenden Schritte umfasst:
- Entnehmen einer komplementären Fraktion des eingelassenen Gases vor dem Entspannen;
- Verflüssigen, zumindest teilweise, der komplementären Fraktion, umfassend einen Wärmeaustausch mit der entspannten Fraktion des eingelassenen Gases; und
- Auffangen der verflüssigten komplementären Fraktion.

11. Verteilungsverfahren nach Anspruch 10, **dadurch gekennzeichnet, dass** eine nicht verflüssigte, gasförmige Fraktion durch Wärmeaustausch mit der zu verflüssigenden komplementären Fraktion des Gases erwärmt wird.
